# EUROPEAN PATENT SPECIFICATION

(11) **EP 3 412 972 B1**
(45) Date of publication and mention of the grant of the patent: **07.10.2020**
(21) Application number: 17175152.2
(22) Date of filing: 09.06.2017
(51) Int. Cl.: F23R 3/00, F23R 3/28, F23R 3/46, F02C 7/18, F01D 25/26

(54) **GAS TURBINE COMPRISING A PLURALITY OF CAN-COMBUSTORS**
GASTURBINE MIT MEHREREN ROHRBRENNERN
TURBINE À GAZ COMPRENANT UNE PLURALITÉ DE CHAMBRES DE COMBUSTION TUBULAIRES

(43) Date of publication of application: 12.12.2018
(73) Proprietor: Ansaldo Energia Switzerland AG, 5401 Baden (CH)
(72) Inventor: ANGUISOLA MCFEAT, Jose, 79787 LAUCHRINGEN (DE); TAHENY, Oliver, 8046 ZÜRICH (CH); HUBER, Tobias Christoph, 79737 HERRISCHRIED (DE); BHATNAGAR, Nishant, 5432 NEUENHOF (CH); CORRADI, Mauro, 5430 WETTINGEN (CH); UGEL, Diego, 5436 WUERENLOS (CH)
(74) Representative: Martini, Gabriele

(56) References cited:
- US-A1- 2014 260 264
- US-A1- 2016 047 316
- US-A1- 2016 069 566
- US-A1- 2017 030 583

## Description

### Field of the Invention

The present invention relates to a gas turbine for power plants comprising a plurality of can-combustors. In particular, the present invention relates to the interaction between each can-combustor and the relative portal hole provided with the outer casing of the gas turbine.

### Description of prior art

As known, a gas turbine for power plant (in the following only gas turbine) comprises a rotor provided with an upstream compressor sector, a combustor sector and a downstream turbine sector. The terms downstream and upstream refer to the direction of the main gas flow passing through the gas turbine. In particular, the compressor sector comprises an inlet supplied with air and a plurality of blades connected to the rotor and configured for compressing the incoming air. The compressed air leaving the compressor flows into a plenum delimited by the outer casing and from there enters into the combustor. Inside the combustor the compressed air is mixed with at least one fuel and such resulting mixture of fuel and compressed air flows into a combustion chamber where this mixture is combusted. The resulting hot gas leaves the combustion chamber and expands in the turbine performing work on the rotor.

The combustor sector can be realized in form of a plurality of can-combustors arranged circumferentially as a ring around the gas turbine axis and supported by the outer casing. In particular, this outer casing comprises a plurality of portal holes for housing the combustor cans that are supported in part outside and in part inside outer casing. Usually, the outer casing is realized in form of two complementary circumferential sectors bolted together at a relative split line.

For mechanical reasons, i.e. in order to maintain the hoop stresses of the portal holes within design requirements, the thickness of the outer casing around the portal holes is higher than the thickness of the remaining parts of the outer casing. This addition of material around the portal holes defines a portion suitable for bolting the combustor cans to the outer casing.

Unfortunately, the above configuration according to the current state of the art involves some drawbacks. In particular, due to the above mentioned accumulation of mass around the portal holes, large temperature gradients occur during the transient operation along the outer casing.

This temperature gradients leads to different thermal expansions along the outer casing and these different thermal expansions lead to the formation of openings at the bolted split plane of the outer casing. In the above situation, the sealing of the split plane of the outer casing during the transient operation is not guaranteed.

US2014260264 discloses a gas turbine according to the preamble of claim 1.

US2016069566, US2016047316, and US2017030583 also disclose gas turbines comprising a plurality of can combustors. These gas turbines are provided with some cooling devices acting on can combustor components, for instance the can combustor liner.

### Disclosure of the invention

Accordingly, a primary object of the present invention is to provide a gas turbine for power plants comprising a plurality of combustor cans supported by an outer casing wherein the sealing of the split plane of the outer casing is guaranteed also during the transient operation.

In order to achieve the objective problem mentioned above, the present invention provides a gas turbine comprising (following the main gas flow direction) a compressor stage, a combustor stage comprising a plurality of can-combustors and at least a turbine stage. The gas turbine moreover comprises an outer casing defining a plenum fed by the compressed air leaving the compressor. The outer casing is provided with a plurality of portal holes for supporting the can-combustors concentrically arranged around the axis of the gas turbine. Each portal hole comprises an inner surface, i.e. the surface that is facing and spaced from the relative can-combustor. Between the portal hole and the relative can-combustor a gap is provided in order to allow the compressed air to flow from the plenum to the can-combustor.

According to the main aspect of the invention, at each portal hole the gas turbine comprises a thermal managing device configured to apply at least a thermal treatment to the inner surface of the relative portal hole. With the terms "thermal treatments" it is meant both cooling and heating treatment suitable for cooling or heating at least a portion of the inner surface of the portal hole, i.e. the surface facing the outer liner of the can-combustor.

Advantageously, according to the invention it is possible to reduce or avoid the temperature gradients occurring during the transient operation along the outer casing by acting on the accumulated mass arranged around the portal hole. Therefore, the present invention allows the improvement of the sealing of the plenum at the split plane of the outer casing avoiding the formation of openings during the transient operation.

Preferably, the thermal managing device is configured for applying simultaneously different thermal treatments to different portions of the inner surface of the portal hole. According to an embodiment of the invention, the thermal managing device comprises of a plate passing through the relative portal hole and having an outer surface spaced and facing the inner surface of the portal hole. Such plate comprises moreover an inner surface fed by cooling air, i.e. the compressed air flowing from the plenum. In this embodiment, the plate is provided with a plurality of impingement holes for impinging the cooling air against the inner surface of the portal hole. Such impingement holes are realized in the plate so that to create at least a zone with a higher density of impingement holes and at least a zone with lower density of impingement holes.

Advantageously, according to this embodiment only some portions of the inner surface of the relative portal hole are impinged with cooling air and this arrangement allows a reduction of the air for cooling purposes.

Preferably, the above mentioned plate is a liner, or a portion of a liner, of the relative can-combustor.

Advantageously, according to this embodiment it is possible to apply the present invention in a gas turbine without any modification of the current outer casing.

According to another embodiment, the thermal managing device may comprise a plurality of turbolator elements realized on the inner surface of each portal hole. As for the previous embodiment, such turbolator elements may be realized in the inner surface of each portal hole so that to create at least a zone with a higher density of turbolator elements and at least a zone with lower density of turbolator elements. Such turbolator are configured for creating a turbulence in the passing compressed air in order to cool the relative portion of the inner surface of the portal hole.

Advantageously, according to this embodiment it is possible to apply the present invention in a gas turbine without any modification of the current can-combustors.

It is to be understood that both the foregoing general description and the following detailed description are exemplary, and are intended to provide further explanation of the invention as claimed. Other advantages and features of the invention will be apparent from the following description, drawings and claims.

The features of the invention are set forth in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
Fig. 1A is a schematic view of a gas turbine for a power plant;
Fig. 2 is a schematic view of the steps performed for installing a can-combustor inside a relative portal hole provided in an outer casing;
Fig. 3 is a schematic view the outer casing provided with a plurality of portal holes;
Fig. 4 is a schematic view of the disposition of the can-combustors in the outer casing with respect to the axis of the gas turbine;
Fig. 5 is a schematic sectional view of a can combustor housed in the relative portal hole;
Fig. 6 is a schematic view of an embodiment for applying a thermal treatment to the inner surface of the portal hole according to the invention.

### Detailed description of preferred embodiments of the invention

In cooperation with attached drawings, the technical contents and detailed description of the present invention are described thereinafter according to preferred embodiments, being not used to limit its executing scope.

Reference will now be made to the drawing figures to describe the present invention in detail.

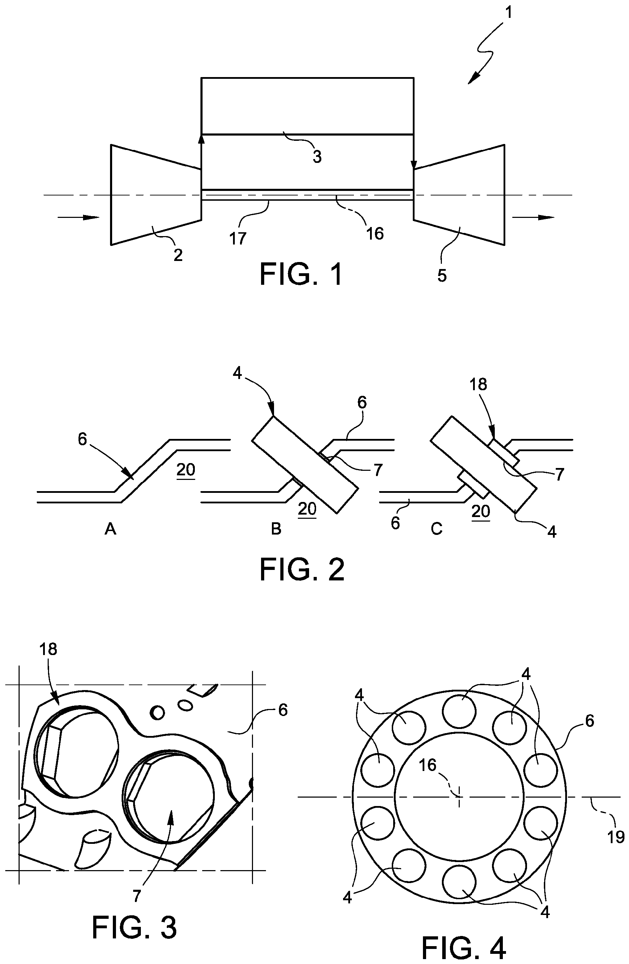

Reference is made to Fig. 1 that is a schematic view of a gas turbine for a power plant. According to the example of figure 1, the gas turbine 1 comprises a compressor 2, a combustor 3 and a turbine 4. As known, the coming air is compressed by the compressor 2 and then enters into a plenum (not shown in figure 1) defined by the outer casing of the gas turbine. From the plenum the compressed air enters the combustor stage 3. In the combustor stage 3 the air is mixed with at least a fuel and this mixture is combusted. The hot gas leaving the combustor stage 3 is expanded in the turbine 4 performing work on the rotor 17 along the axis 16.

Fig. 2 is a schematic view of the steps performed for installing a can-combustor inside a relative portal hole provided in the outer casing of the gas turbine.

The first step consists in realizing a plurality of holes 7 in the outer casing 6. Once realized such holes 7, each can-combustor 4 is housed in the relative hole 7. As disclosed in figure 2, each can-combustor 4 comprises a portion projecting inside the plenum 20 and a portion that remains outside the outer casing 6. Between the portal hole 7 and the relative can-combustor 4 a gap (not shown in figure 2) is present for allowing the compressed air to flow from the plenum 20 into the can combustor 4. The above mentioned gap is defined by the inner surface of the hole 7 and the liner 10 of the can-combustor 4. In order to maintain the hoop stresses of the portal holes within design requirements, around the portal hole additional material is disposed so that the thickness of the outer casing at the portal holes is higher than the thickness of the remaining parts of the outer casing. In figure 2 this additional material has been represented by the reference 18.

Fig. 3 is a schematic view of the outer casing 6 provided with a plurality of portal holes 7. In particular, fig. 3 discloses the disposition of the accumulated mass 18 around the portal holes 7 suitable for bolting the can combustors to the outer casing.

Fig. 4 is a schematic view of the disposition of the can-combustors 4 with respect to the axis 16 of the gas turbine. The reference 19 in fig. 4 refers to the split line of the outer casing 19. Indeed, the outer casing 6 is realized in two pieces jointed together along such split line 19.

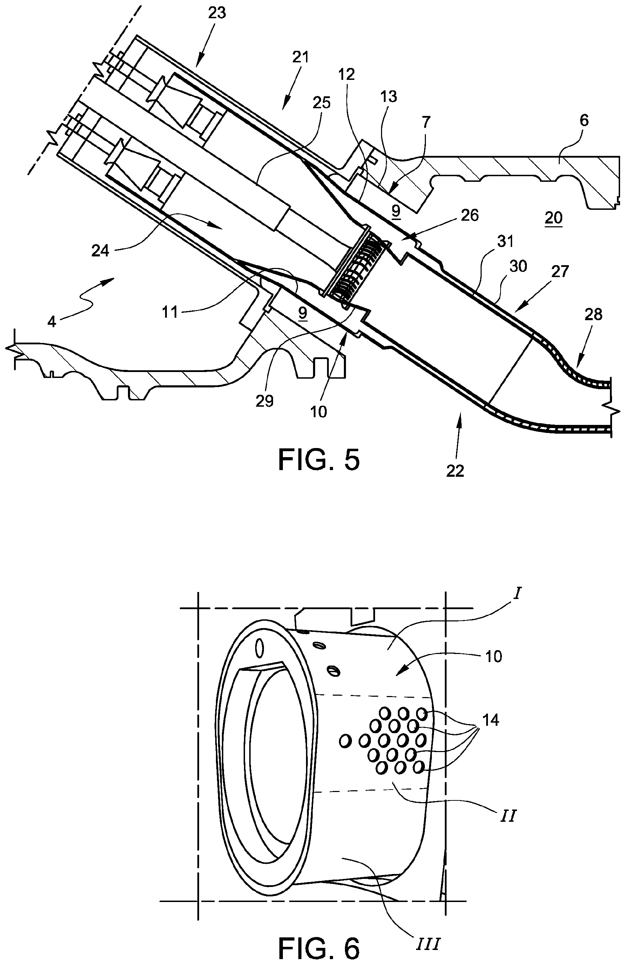

Fig. 5 is a schematic sectional view of a can combustor housed in the relative portal hole. The disclosed can combustor 4 comprises a first-stage combustor 12 and a second-stage combustor 22 sequentially arranged along the gas flow. More specifically, the first-stage combustor 21 comprises a burner 23 and a combustion chamber 24. A fuel lance 25 for feeding fuel to the second-stage combustor 22 extends axially through the combustion chamber 24.

The second-stage combustor 22 comprises a second burner 26, a second combustion chamber 27 and a transition element 28 for coupling to the turbine 5 (not shown).

The second burner 26 is configured to admix the hot gas flow received from the first-stage combustor 21 and fuel received through the fuel lance 25. The second burner 26 comprises an outer wall 29. Within the second burner 26, the gas flow is delimited by the outer wall 29.

The second combustion chamber 27 extends along a flow direction downstream of the second burner 26 and comprises an outer liner 30 surrounding an inner liner 31 at a distance therefrom, so that a cooling channel is defined between the outer liner 30 and the inner liner 31. This cooling channel is fed by the compressed air housed in the plenum 20. The outer liner 30 comprises a portion 10 facing the inner surface 13 of the portal hole 7.

Fig. 6 is a schematic view of an embodiment for applying a thermal treatment to the inner surface of the portal hole according to the invention. In particular, figure 6 discloses the portion 10 of the outer liner 30 facing the inner surface 13 of the portal hole 7 (not shown). According to this embodiment, the portion 10 of the outer liner 30 is provided with a plurality of impingement holes 14 for impinging the cooling air passing in the cooling channel against the inner surface 13 of the portal hole 7. In particular, the disclosed portion 10 of the liner 30 comprises a plurality of zones wherein each zone is provided with a different number and/or arrangement of the impingement holes 14. Indeed, the fist zone I is provided with a low concentration of impingement holes 14 arranged downstream of the portion 10 of the liner 30, the second zone II is provided with a high concentration of impingement holes 14 arranged upstream of the portion 10 of the liner 30 and the third zone does not comprises any impingement hole. Other complementary or alternative embodiments (not shown) may comprise a plurality of turbolator elements arranged on the inner surface 13 of the portal hole 7 and/or on the outer surface 12 of the portion 10 of the liner 30.

Although the invention has been explained in relation to its preferred embodiment(s) as mentioned above, it is to be understood that many other possible modifications and variations can be made without departing from the scope of the present invention as defined in the claims.

## Claims

1. Gas turbine for power plants, the gas turbine (1) comprising a compressor stage (2), a combustor stage (3) provided with a plurality of can-combustors (4), at least a turbine stage (5) and an outer casing (6) defining a plenum (20) and provided with plurality of portal holes (7) for supporting the can-combustors (4); each portal hole (7) comprising an inner surface (13) facing and spaced from the relative can-combustor (4) in order to realize a gap (9) for allowing the compressed air to flow from the plenum (20) into the combustor can (4);
**characterized in that**
at each portal hole (7) the gas turbine (1) comprises a thermal managing device configured for applying at least a thermal treatment to the inner surface (13) of the relative portal hole (7).

2. Gas turbine as claimed in claim 1, wherein the thermal managing device is configured for applying simultaneously different thermal treatments to different portions of the inner surface (13) of the portal hole (7).

3. Gas turbine as claimed in claim 1 or 2, wherein each thermal managing device comprises a plate (10) passing through the relative portal hole (7) and having an outer surface (12) spaced and facing the inner surface (13) of the portal hole (7) and an inner surface (11) fed by cooling air, the plate (10) being provided with a plurality of impingement holes (14) for impinging the cooling air against the inner surface (13) of the portal hole (7).

4. Gas turbine as claimed in claim 3, wherein the impingement holes (14) are realized only in a zone of the plate (10).

5. Gas turbine as claimed in claim 3, wherein the impingement holes (14) are realized in the plate (10) so that to create at least a zone with a higher density of impingement holes (14) and at least a zone with lower density of impingement holes (14).

6. Gas turbine as claimed in any one of the preceding claims from 3 to 5, wherein the plate (10) is a liner of the relative can-combustor (4).

7. Gas turbine as claimed in claim 1 or 2, wherein each thermal managing device comprises a plurality of turbolator elements realized on the inner surface (13) of each portal hole (7).

8. Gas turbine as claimed in claim 7, wherein the turbolator elements are realized only in a zone of the inner surface (13) of each portal hole (7).

9. Gas turbine as claimed in claim 8, wherein the turbolator elements are realized in the inner surface (13) of each portal hole (7) so that to create at least a zone with a higher density of turbolator elements and at least a zone with lower density of turbolator elements.

## Patentansprüche

1. Gasturbine für Kraftwerke, wobei die Gasturbine (1) eine Verdichterstufe (2), eine Brennerstufe (3), die mit mehreren Rohrbrennern (4) versehen ist, mindestens eine Turbinenstufe (5) und ein Außengehäuse (6), das einen Verteilerkanal (20) definiert und mit mehreren Portallöchern (7) zum Unterstützen der Rohrbrenner (4) versehen ist, umfasst; wobei jedes Portalloch (7) eine Innenfläche (13) umfasst, die dem jeweiligen Rohrbrenner (4) zugewandt und von ihr beabstandet ist, um eine Lücke (9) zu bilden, um der Druckluft zu ermöglichen, vom Verteilerkanal (20) in das Brennerrohr (4) zu strömen;
**dadurch gekennzeichnet, dass**
die Gasturbine (1) bei jedem Portalloch (7) eine Wärmemanagementvorrichtung umfasst, die zum Anwenden mindestens einer Wärmebehandlung auf die Innenfläche (13) des jeweiligen Portallochs (7) konfiguriert ist.

2. Gasturbine nach Anspruch 1, wobei die Wärmemanagementvorrichtung zum gleichzeitigen Anwenden verschiedener Wärmebehandlungen auf verschiedene Abschnitte der Innenfläche (13) des Portallochs (7) konfiguriert ist.

3. Gasturbine nach Anspruch 1 oder 2, wobei jede Wärmemanagementvorrichtung eine Platte (10) umfasst, die durch das jeweilige Portalloch (7) verläuft und eine Außenfläche (12), die von der Innenfläche (13) des Portallochs (7) beabstandet und ihr zugewandt ist, und eine Innenfläche (11), der Kühlluft zugeführt wird, besitzt, wobei die Platte (10) mit mehreren Aufpralllöchern (14) zum Auftreffen der Kühlluft auf die Innenfläche (13) der Portallochs (7) versehen ist.

4. Gasturbine nach Anspruch 3, wobei die Aufpralllöcher (14) lediglich in einer Zone der Platte (10) realisiert sind.

5. Gasturbine nach Anspruch 3, wobei die Aufpralllöcher (14) in der Platte (10) derart realisiert sind, dass mindestens eine Zone mit einer höheren Dichte der Aufpralllöcher (14) und mindestens eine Zone mit geringerer Dichte der Aufpralllöcher (14) gebildet wird.

6. Gasturbine nach einem der vorhergehenden Ansprüche 3 bis 5, wobei die Platte (10) eine Auskleidung des Rohrbrenners (4) ist.

7. Gasturbine nach Anspruch 1 oder 2, wobei jede Wärmemanagementvorrichtung mehrere Turbolatorelemente umfasst, die an der Innenfläche (13) jedes Portallochs (7) realisiert sind.

8. Gasturbine nach Anspruch 7, wobei die Turbolatorelemente lediglich in einer Zone der Innenfläche (13) jedes Portallochs (7) realisiert sind.

9. Gasturbine nach Anspruch 8, wobei die Turbolatorelemente in der Innenfläche (13) jedes Portallochs (7) realisiert sind, um mindestens eine Zone mit einer höheren Dichte von Turbolatorelementen und mindestens eine Zone mit geringerer Dichte von Turbolatorelementen zu erstellen.

## Revendications

1. Turbine à gaz pour groupes motopropulseurs, la turbine à gaz (1) comprenant un étage de compresseurs (2), un étage de chambres de combustion (3) prévu avec une pluralité de chambres de combustion tubulaires (4), au moins un étage de turbines (5) et un carter externe (6) définissant un plénum (20) et prévu avec une pluralité de trous de portail (7) pour supporter les chambres de combustion tubulaires (4) ; chaque trou de portail (7) comprenant une surface interne (13) faisant face à et espacée de la chambre de combustion tubulaire (4) relative afin de réaliser un espace (9) pour permettre à l'air comprimé de s'écouler à partir du plénum (20) dans le tube de chambre de combustion (4) ;
**caractérisée en ce que** :
au niveau de chaque trou de portail (7), la turbine à gaz (1) comprend un dispositif de gestion thermique configuré pour appliquer au moins un traitement thermique sur la surface interne (13) du trou de portail (7) relatif.

2. Turbine à gaz selon la revendication 1, dans laquelle le dispositif de gestion thermique est configuré pour appliquer simultanément différents traitements thermiques sur différentes parties de la surface interne (13) du trou de portail (7).

3. Turbine à gaz selon la revendication 1 ou 2, dans laquelle chaque dispositif de gestion thermique comprend une plaque (10) passant par le trou de portail (7) relatif et ayant une surface externe (12) espacée et faisant face à la surface interne (13) du trou de portail (7) et une surface interne (11) alimentée par air de refroidissement, la plaque (10) étant prévue avec une pluralité de trous d'empiétement (14) pour faire empiéter l'air de refroidissement contre la surface interne (13) du trou de portail (7).

4. Turbine à gaz selon la revendication 3, dans laquelle les trous d'empiétement (14) sont réalisés uniquement dans une zone de la plaque (10).

5. Turbine à gaz selon la revendication 3, dans laquelle les trous d'empiétement (14) sont réalisés dans la plaque (10) afin de créer au moins une zone avec une densité supérieure des trous d'empiétement (14) et au moins une zone avec une densité inférieure des trous d'empiétement (14).

6. Turbine à gaz selon l'une quelconque des revendications 3 à 5, dans laquelle la plaque (10) est un revêtement de la chambre de combustion tubulaire (4) relative.

7. Turbine à gaz selon la revendication 1 ou 2, dans laquelle chaque dispositif de gestion thermique comprend une pluralité d'éléments de génération de turbulences réalisés sur la surface interne (13) de chaque trou de portail (7).

8. Turbine à gaz selon la revendication 7, dans laquelle les éléments de génération de turbulences sont réalisés uniquement dans une zone de la surface interne (13) de chaque trou de portail (7).

9. Turbine à gaz selon la revendication 8, dans laquelle les éléments de génération de turbulences sont réalisés dans la surface interne (13) de chaque trou de portail (7) afin de créer au moins une zone avec une densité supérieure d'éléments de génération de turbulences et au moins une zone avec une densité inférieure d'éléments de génération de turbulences.
